# EUROPÄISCHE PATENTSCHRIFT

(11) **EP 3 963 657 B1**
(45) Veröffentlichungstag und Bekanntmachung des Hinweises auf die Patenterteilung: **19.02.2025**
(21) Anmeldenummer: 20723105.1
(22) Anmeldetag: 29.04.2020
(51) Int. Cl.: H01M 10/617, H01M 10/643, H01M 10/647, H01M 10/653, H01M 10/6555, H01M 10/6557, H01M 10/6568

(54) **TEMPERIERSYSTEM FÜR LITHIUM-IONEN-BATTERIEZELLEN**
TEMPERATURE CONTROL SYSTEM FOR LITHIUM ION BATTERY CELLS
SYSTÈME D'ÉQUILIBRAGE DE LA TEMPÉRATURE POUR DES CELLULES DE BATTERIE AUX IONS DE LITHIUM

(30) Priorität: 02.05.2019 DE 102019111354; 02.05.2019 DE 102019111355; 28.02.2020 DE 102020105308
(43) Veröffentlichungstag der Anmeldung: 09.03.2022
(73) Patentinhaber: Oerlikon Friction Systems (Germany) GmbH, 28719 Bremen (DE)
(72) Erfinder: WALTER, Heribert, 96047 Bamberg (DE); MAAG, Michael, 91567 Herrieden (DE); FRITZ, Tobias, 90556 Seukendorf (DE); GRÄDLER, Markus, 91052 Erlangen (DE); UHLEMANN, Jessica, 91088 Bubenreuth (DE); ÜBLER, Thomas, 90431 Nürnberg (DE)
(74) Vertreter: Ahrens, Gabriele
(86) Internationale Anmeldenummer: PCT/EP2020/061913
(87) Internationale Veröffentlichungsnummer: WO 2020/221806

(56) Entgegenhaltungen:
- EP-A1- 2 744 034
- DE-A1- 102009 052 254
- DE-A1- 102017 111 130
- US-B1- 8 465 864

## Beschreibung

Die vorliegende Erfindung betrifft ein effektives Temperiersystem zum Kühlen und Heizen von wiederaufladbaren Batteriezellen, insbesondere wiederaufladbaren Lithium(Li)-Ionenbatterien (LIBs).

LIBs haben eine hohe Energiedichte bei vergleichsweise geringem Gewicht und Raumanspruch. Sie werden daher bereits in zahlreichen Anwendungsbereichen zur effektiven Energiespeicherung benutzt. Ein besonders prominentes Anwendungsbeispiel ist die Elektromobilität, zum Beispiel als Energiequelle in Elektrofahrzeugen oder sogenannten Hybridfahrzeugen.

Typischerweise werden für den Betrieb eine Anzahl von Batteriezellen zu einem Batteriemodul zusammengefasst und zwei oder mehrere Batteriemodule zu einem Batteriepack.

Die Zellen und/oder Module können in Reihe und/oder Serie geschaltet sein.

Es gibt Batteriezellen in verschiedenen Größen und Gestalten, zum Beispiel Zylinderzellen oder flache Zellen, wie prismatische Zellen oder Pouch-Zellen (Coffeebag-Zelle). Bei Pouch-Zellen wird ein flexibles Gehäuse verwendet, das in der Regel aus beidseitig kunststoffbeschichteter Aluminiumfolie besteht. Eine typische Pouch-Zellendimension ist 350 mm x 100 mm.

Flache Zellen, wie Pouch-Zellen oder prismatische Zellen sind im Hinblick auf eine bessere Wärmeableitung und Stapelbarkeit bevorzugt.

Ein typischer Aufbau einer LIB ist wie folgt, beginnend von der Anodenseite:
- eine Anode mit Stromableiter (in der Regel Kupfer), der zumindest auf der der Kathode zugewandten Seite mit aktiven Material (in der Regel Graphit) beschichtet ist,
- ein Separator für die elektronische Trennung der Elektroden, der aber für Li-Ionen durchlässig ist, und
- eine Kathode mit Stromableiter (in der Regel Aluminium), der zumindest anodenseitig mit einem aktiven Material beschichtet ist, das bei der Ladung der Zelle Li-Ionen abgibt, und
- ein Elektrolyt (in der Regel flüssig oder fest), der als Vermittler zwischen den Reaktionen an den Elektroden fungiert und den Li-Ionentransport gewährleistet.

Geeignete Materialien für die aktiven Materialien für die Kathode bzw. Anode, Separator und Elektrolyt sind Stand der Technik.

Von zentraler Bedeutung für die Betriebsfähigkeit und Sicherheit von LIBs - aber auch für alle anderen Arten von wiederaufladbaren Batterien - ist die Einhaltung eines festgelegten Temperaturbereichs. Das thermische Management von wieder aufladbaren Batteriezellen ist ein wesentliches Kriterium, um den Normalbetrieb mit optimaler Leistungsabgabe und Lebensdauer gewährleisten zu können.

Generell ist es wichtig, Lithium-Ionen-Batteriezellen in einen definierten Temperaturbereich zwischen 15 bis 35°C zu betreiben, um ein vorzeitiges Altern der Batteriezellen zu vermeiden und eine hohe Zyklenbeständigkeit zu gewährleisten. Nur wenn das Batteriesystem konsequent in dem idealen Temperaturbereich betrieben wird, können die von der Industrie geforderten Ladezyklen von bis zu 1600 Vollzyklen über 10 Jahre Nutzungsdauer erreicht werden. So sind Batteriesysteme, die bezogen auf ihren Auslieferungszustand (Begin of Life, BoL) 20% ihrer Speicherkapazität eingebüßt haben und folglich bei Vollladung nur noch maximal 80% der ursprünglichen Zellkapazität (State of Health, SoH) verfügen, für automobile Anwendungen nicht mehr einsetzbar (End of Life, EoL).

Zu jeder Jahreszeit, im Sommer wie auch im Winter, muss durch eine entsprechende Temperierung der Batteriezellen sichergestellt werden können, dass die Zellen in einem konstanten Temperaturfenster zwischen 15 bis 35°C betrieben werden können, wobei die optimale Betriebstemperatur bei 25°C liegt. Wird die Batterie zum Beispiel kontinuierlich bei 40°C betrieben, wird die Alterung um bis zu 50 % beschleunigt.

Zu berücksichtigen ist, dass das thermische Verhalten einer Batteriezelle stark anisotrop ist. Senkrecht zur Zellfläche bestimmt die geringe Wärmeleitfähigkeit des Separators von etwa 1 W/mK im Falle von Polyethylenfolien die Wärmeleitfähigkeit des Zellstapels oder der aufgewickelten Zellrolle bei zylindrischen Zellen. In der Ebene bei Pouch- und prismatischen Zellen bzw. der Höhe bei zylindrischen Zellen wird die Wärmeleitfähigkeit durch die metallischem Stromableiter bestimmt, die bei ca. 30 W/mK liegt.

Ein weiteres Problem ist durch den Wunsch des Fahrers eines Elektroautos bedingt, die Ladezyklen in einer Ladestation möglichst kurz zu halten. Bereits in naher Zukunft wird es Ladesysteme mit 800 V Versorgungsspannung geben, mit denen hohe Laderaten (C-Raten) von bis zu 3 bis 5 C realisiert werden können. Derart hohe C-Raten führen zu einer Steigerung der Stromliniendichte um den Kontaktbereich der Elektroden und letztlich zu einer drastischen Erwärmung der gesamten Zelle.

Temperaturen oberhalb von 80°C müssen in jedem Fall vermieden werden, da in diesem Bereich die Elektrolytschicht um die Graphitpartikel der Anode abgebaut wird.

Generell sollten bereits Temperaturen oberhalb von 60°C vermieden werden. An dieser Stelle ist zu berücksichtigen, dass in warmen Ländern schon die Umgebungstemperatur und die Abstrahlung der Wärme von der Straße zu einer solch hohen Erwärmung führen kann.

Ein weiterer wichtiger Aspekt für eine beschleunigte Zellalterung ist neben der absoluten Betriebstemperatur die Temperaturhomogenität über die Zellfläche und Zelldicke.

Über die Zellfläche gesehen, besteht ein Temperaturgefälle, wobei die Temperatur im Bereich der Elektrodenkontakte am höchsten ist. Diese unterschiedliche Wärmeverteilung führt zu mechanischen Spannungen innerhalb der Zelle, die die Lebensdauer verkürzen können.

So beschreibt US 8,465,865 B1 eine wärmeableitende Platte zur Kühlung von Batteriezellen einer Batterieanordnung, wobei die wärmeableitende Platte aus einem elastischen Komposit-Material besteht, das aus einer Polymermatrix gebildet ist, in der wärmeleitende Füllstoffe verteilt vorliegen und eine Zwischenschicht aus in einer Richtung ausgerichteten Carbonfasern vorgesehen ist. Für das Kühlsystem ist jeweils eine wärmeableitende Platte zwischen zwei Batteriezellen einer Batterieanordnung vorgesehen. Da die wärmeableitenden Platten eine größere Breite als die Batteriezellen haben, ragen die Randbereiche der wärmeableitenden Platte über die Randbereiche der Batteriezellen hinaus, so dass ein freier Überstand entsteht, der als Kühlkanal zur Durchleitung von Luft zur Kühlung benutzt wird. Im Ergebnis wird hier die Wärme mittels Durchleitung von Luft abgeführt und die Batteriezellen so gekühlt.

Hohe Lade- bzw. Entladeströme wie sie heutzutage angestrebt werden, erzeugen eine erhöhte Stromliniendichte im Bereich der Elektrodenanschlusskontakte, die in diesem Bereichen zu einer erhöhten Erwärmung führen. Hierdurch entsteht letztlich in der Anoden- bzw. Kathodenbeschichtung mechanischer Stress, welcher zum Einen speziell die Anodenpartikel direkt schädigen kann, zum Anderen aufgrund von Dehnung und Schrumpf zum Verlust des elektrischen Kontaktes der Partikel untereinander führen kann, und schlussendlich auch zum Ablösen der Beschichtung von den Stromableiterfolien und damit einhergehend zum Verlust des elektrischen Kontakts der Beschichtung zum Stromableiter führt.

Es ist daher erforderlich, Wärme aus den Elektrodenkontaktbereichen abzuführen und über die Zellfläche bzw. -dicke für eine möglichst gleichförmige Wärmeverteilung zu sorgen.

Bei dem thermischen Management von Batteriesystemen ist zudem der Fahrzeugbetrieb bei niedrigen Temperaturen zu berücksichtigen. Bei niedrigen Temperaturen, insbesondere unterhalb von 0°C, nimmt die Zellspannung drastisch ab. Da für den normalen Fahrbetrieb die Zellspannung bereits bei Temperaturen unterhalb von 10°C nicht mehr ausreicht, wird die Reichweite des Fahrzeugs stark eingeschränkt.

Die Arbeitsspannung einer LIB liegt typischerweise in einem Bereich zwischen 2,7 V - 4,2 V. Aufgrund der zunehmenden Viskosität des Elektrolyten bei abnehmenden Temperaturen geht dessen Ionenleitfähigkeit und damit einhergehend die Zellspannung zurück. Mit ca. 2,7 V ist die untere Abschaltspannung der Zelle erreicht und somit aus Sicherheitsgründen kein weiterer Betrieb der Zelle mehr möglich.

Neben der Verringerung der Zellkapazität kann zudem das Laden der Batteriezelle bei niedrigen Temperaturen zu dem sogenannten Li-Plating der Anode führen. Das Li-Plating basiert darauf, dass sowohl die Kathode als auch die Anode die physikalische Fähigkeit besitzen, Lithium-Ionen zu binden. Während des Ladens zwingt das elektrische Feld die Ionen von der Kathode zur Anode zu wandern, wo sie sich in die Gitterstruktur des aktiven Materials, z.B. Graphit, einlagern (interkalieren).

Insbesondere bei niedrigen Temperaturen kommt es vor, dass die Li-Ionen - statt sich wie erwünscht in die Anode einzulagern - metallisches Lithium bilden, das sich auf der Anode ablagert und damit nicht mehr für den Ladeprozess zur Verfügung steht. Dieser Verlust an zyklisierbaren Lithium-Ionen mindert die Leistungsfähigkeit der Batterie und kann schlimmsten Falls zu einem sogenannten "Thermal Runaway" mit Brand und Explosion der Zellen führen.

Aus den vorstehenden Ausführungen ergibt sich, dass für ein optimales thermisches Management eines Batteriesystems neben der Kühlfunktion bei hohen Temperaturen und/oder hohen Laderaten auch ein Heizen der Zellen bei niedrigen Temperaturen erforderlich ist. Es ist daher ein Temperiermodul wünschenswert, das beide Funktionen, das Kühlen sowie das Heizen, effizient ermöglichen kann. Hierfür sollte das Temperiermodul einen möglichst guten thermischen Kontakt zur Oberfläche der Batteriezelle aufweisen.

Ein geeignetes Temperiermodul sollte daher folgende Eigenschaften aufweisen:
- es sollte baulich möglichst schlank und leicht sein;
- es soll mechanisch selbsttragend sein, jedoch eine gewisse Flexibilität hinsichtlich Verdrehen und Biegen zulassen;
- es muss zur Temperierung mit einem flüssigen oder gasförmigen Wärmeübertragungsmedium durchströmbar sein;
- vorzugsweise sollte das Modul Temperaturinhomogenitäten (einen Temperaturgradienten) über die Batteriezellfläche ausgleichen können;
- es sollte eine elastisch verformbare Oberflächenschicht zur besseren Ankopplung an unebene Flächen und zur gleichmäßigen Verteilung der Druckbelastung auf die Anodenschichten eines Batteriestapels aufweisen;
- es sollte eine gewisse mechanische Flexibilität aufweisen, um sich möglichen Dimensionsänderungen der Zelle beim Laden/Entladen anpassen zu können, wie es speziell bei Pouch-Zellen der Fall ist;
- es sollte die Zellkontakte einer Batteriezelle direkt Kühlen oder Heizen können.

Die Aufgabe wird aelöst durch das erfindungsgemäße Temperiermodul zum Kühlen oder Heizen von Batteriezellen gemäß Anspruch 1.

Die Dicke des Termperiermoduls sollte möglichst gering sein, um den Raumbedarf eines Batteriesystems, das mit Temperiermodul(en) ausgestattet ist, nicht unnötig zu vergrößern. Es sind daher flache Temperiermodule gewünscht, deren Dicke in Bezug auf die anderen Dimensionen des Temperiermoduls wie Länge, Breite oder Durchmesser, dünn ist.

Die Form des Temperiermoduls richtet sich nach der Form der Batteriezelle, für die es verwendet werden soll. Für flache Batteriezellen ist eine rechteckige Grundform zweckmäßig. Es sind aber auch andere Formen möglich, wie quadratisch, kreisförmig etc.

Die Außenhülle umgibt die innenliegenden Komponenten des Moduls. Sie hat zwei sich gegenüberliegende Hauptflächen, die entlang ihrer Kanten miteinander verbunden sind. Die Verbindung kann über Seitenflächen erfolgen.

Die Außenhülle mit Randbereich ist aus einem zumindest teilweise flexiblen Polymermaterial gebildet wie einem Silikonelastomer oder Polyurethanelastomer. Die teilweise flexiblen Polymermaterialien weisen vorzugsweise eine Shorehärte A von A 20 bis A 60 bzw. eine Shorehärte 00 von 00 20 bis 00 80 auf. Beispielsweise können für Batteriezellen oder Batteriezellstapel mit strukturierter unebener Oberfläche weichere Polymermaterialien für die Außenhülle verwendet werden, die sich den Oberflächenstrukturen der Batterien leichter anpassen können, so dass ein guter Kontakt zwischen dem Temperiermodul und der Oberfläche der Batteriezelle gewährleistet werden kann. Ein guter Kontakt zwischen Temperiermodul und Batteriezelle ist für eine möglichst effiziente Wärmeübertragung wünschenswert.

Zusätzlich zum Ausgleich von Oberflächenunebenheiten der Batteriezellen bewirkt die Außenhülle eine homogene Druckübertragung auf die Zelle. Beispielsweise können Drücke von 0,1 bis 0,5 MPa sicher übertragen werden und eine vollständige Rückstellung bei Druckentlastung gewährleistet werden. Damit kann die Außenhülle einer Dimensionsänderung beim Laden/Entladen entgegen wirken und die Anoden- und Kathodenbeschichtung auf den Stromableitern stabilisieren.

Entlang zwei sich gegenüberliegenden Randbereichen der Hauptflächen verläuft jeweils ein Leitungskanal zur Durchleitung eines Wärmeübertragungsmediums. Die Leitungskanäle können jeweils eine Eintrittsöffnung und eine Austrittsöffnung für das Wärmeübertragungsmedium aufweisen. Sind die Leitungskanäle miteinander verbunden, kann ein Leitungskanal eine Eintrittsöffnung und der andere Leitungskanal eine Austrittsöffnung aufweisen.

Die Eintrittsöffnungen sind mit einem Anschluss an ein Kühl-/Heizsystem versehen, wobei die Anschlüsse direkt an die Außenhülle angeformt werden können.

Zwischen den Hauptflächen der Außenhülle befindet sich mindestens eine wärmeleitende Schicht aus unidirektionalem Carbonfaser-Komposit. Schichten aus unidirektionalen Carbonfaser-Komposit zeichnen sich durch eine hohe Wärmeleitfähigkeit in Faserrichtung aus. Die Fasern sind daher parallel zu den Zellkontakten einer zu temperierenden Batteriezelle ausgerichtet, um so die Wärme über die Zellfläche verteilen und vereinheitlichen zu können.

Durch die parallele Ausrichtung der Fasern kann Wärme von den thermisch besonders belasteten Kontaktbereichen der Zelle abgeführt werden, wodurch die Kontaktbereiche von Wärme entlastet werden, die Wärme homogener über die Gesamtfläche verteilt und insgesamt eine Kühlung der Gesamtfläche erzielt wird. Darüber hinaus dient die Schicht aus Carbonfaser-Komposit als teilflexible Tragstruktur für weitere Modulkomponenten.

Die Schicht aus Carbonfaser-Komposit kann aus einem unidirektionalen Gelege aus Carbonfasern in einer Duroplast- oder Thermoplastmatrix gebildet sein. Typischerweise können die Carbonfasergelege aus mehreren Lagen aus Carbonfasern aufgebaut sein.

Die Dicke der Schichten aus Carbonfaser-Komposit liegt typischerweise bei 0,1 bis 0,5 mm, vorzugsweise bei 0,2 bis 0,3 mm. Beispielsweise kann die Schicht aus Carbonfaser-Komposit aus einem unidirektionalen Gelege der Carbonfasern in einer Silikonharzmatrix gebildet sein.

Bei Bedarf kann die Flexibilität der Carbonfaser-Kompositschicht erhöht werden, zum Beispiel für den Fall, dass Unebenheiten der Oberfläche einer Batteriezelle auszugleichen sind oder um eine Formanpassung an die Form einer Batteriezelle zu erleichtern. Hierfür kann dem Bindeharzsystem der Schicht aus Carbonfaser-Komposit ein höherer Anteil an Weichmachern zugesetzt werden, wie zum Beispiel monofunktionale Siloxane oder epoxierte Ölsäureester, die dem Komposit eine höhere Flexibilität verleihen.

Gemäß einer besonderen Ausgestaltung des Temperiermoduls kann auf jeder Innenseite der beiden Hauptflächen mindestens eine wärmeleitende Schicht aus unidirektionalem Carbonfaser-Komposit vorgesehen sein, und sich zwischen den wärmeleitenden Schichten aus unidirektionalem Carbonfaser-Komposit eine Zwischenschicht befinden, die ein oder mehrere Durchflusskanäle aufweist, über die die beiden Leitungskanäle miteinander verbunden sind.

Die Zwischenschicht kann aus einem Polymermaterial oder Metall hergestellt sein. Beispielsweise kann ein Polymermaterial verwendet werden wie es vorstehend für die Außenhülle beschrieben ist. Besonders vorteilhaft ist, wenn das Material für die Zwischenschicht wärmeleitend ist. Beispielsweise kann ein wärmeleitender Kunststoff oder ein Metall mit guter Wärmeleitfähigkeit verwendet werden.

Aufgrund ihrer sehr guten Wärmeleitfähigkeit sind besonders geeignete Metalle Silber (429), Kupfer (380) oder Aluminium (236) jeweils bei 0°C. Aufgrund des guten Preis-Leistungsverhältnisses ist Kupfer besonders bevorzugt.

Wärmeleitende Kunststoffe, auch als wärmeleitende Kunststoff-Compounds bezeichnet, enthalten Füllstoffe, die die Wärmeleitfähigkeit verbessern. Die Füllstoffe werden üblicherweise in einer großen Menge in den Kunststoff eingebracht, so dass von hochgefüllten Kunststoff-Compounds gesprochen wird. Wärmeleitende hochgefüllte Kunststoff-Compounds haben einen Füllstoffanteil von mindestens 50 Gew.-%.

Vorzugsweise haben die wärmeleitenden Kunststoff-Compounds eine Wärmeleitfähigkeit von mindestens 0,5 W/mK bis 3 W/mK oder auch mehr.

Füllstoffe für wärmeleitfähige Kunststoff-Compounds sind organische Füllstoffe wie Graphit, metallische Füllstoffe, z. B. Kupfer oder Aluminium und keramische Füllstoffe, z. B. Bornitrid, Aluminiumsilikat. Der Mengenanteil an Füllstoffen, die die Wärmeleitfähigkeit verbessern, beträgt im Allgemeinen mindestens 50 Gew.-%, vorzugsweise mindestens 65 Gew.-% und insbesondere bevorzugt bis zu 80 Gew.-% und bei Bedarf mehr.

Die wärmeleitfähigen Kunststoff-Compounds können neben der Hauptfüllstoffkomponente einen oder mehrere zusätzliche Füllstoffe enthalten.

Das Polymermaterial bildet die Matrix des Kunststoff-Compounds. Es können eine Vielzahl verschiedener Polymerarten verwendet werden, wie thermoplastische Polymere, thermoplastische Elastomere, Elastomere oder Duroplaste.

Die Durchflusskanäle, die in der Zwischenschicht vorgesehen sind, verbinden die beiden Leitungskanäle, die sich entlang der beiden sich gegenüberliegenden Randbereiche des Moduls erstrecken.

Die Durchflusskanäle können sich quer über die Zwischenschicht von einem Randbereich zum gegenüberliegenden Randbereich erstrecken. Sie können parallel zueinander, insbesondere parallel zur Querachse, ausgerichtet sein. Sie können schlangenlinienförmig, als Mäander oder einer anderen geeigneten Form verlaufen.

Es können Verbindungskanäle vorgesehen sein, die zwei oder mehrere Durchflusskanäle miteinander verbinden.

Die Durchflusskanäle können rinnenförmige Einschnitte auf einer oder beiden Oberflächenseiten der Zwischenschicht sein, wobei die rinnenförmigen Einschnitte die Zwischenschicht nicht vollständig durchtrennen.

Sind auf beiden Oberflächenseiten rinnenförmige Durchflusskanäle vorgesehen, können die Durchflusskanäle der einen Oberflächenseite versetzt zu den Durchflusskanälen der anderen Oberflächenseite angeordnet sein.

Die Erzeugung der rinnenförmigen Einschnitte in den Oberflächen der Zwischenschicht kann auf an sich bekannte Art und Weise mechanisch durch Einprägen, Fräsen, mittels Extrusion usw. erfolgen.

Beispielsweise können thermoplastische hochgefüllte Kunststoff-Compounds für die Herstellung von Zwischenschichten mit rinnenförmigen Durchflüssen verwendet werden.

Gemäß einer Ausgestaltung können die Durchflusskanäle die Zwischenschicht vollständig durchschneiden, so dass die Zwischenschicht in einzelne Abschnitte unterteilt wird. Dabei bilden die sich gegenüberstehenden Seitenflächen zweier benachbarter Abschnitte die Seitenflächen des Kanals, der durch den Abstand zwischen den beiden Abschnitten definiert ist.

Als Abschnitte für die Ausbildung einer Zwischenschicht mit Durchflusskanälen, die die Zwischenschicht vollständig durchtrennen, können Streifen aus einem gut wärmeleitenden Material, wie z. B. vorstehend genannt ist, verwendet werden, die nacheinander und voneinander beabstandet im Modul angeordnet sind.

Die Abdeckung der freien Oberflächen der Durchflusskanäle und damit der Abschluss nach oben bzw. unten eines Durchflusskanals, bilden angrenzende Schichten, zum Beispiel die Innenseite der Hauptflächen der Außenhülle oder weitere, innenliegende Schichten des Moduls, wie zum Beispiel die Schicht oder Schichten aus unidirektionalem Carbonfaser-Komposit.

Die Zwischenschicht aus wärmeleitenden Material trägt zur Ableitung der von der Zelle kommenden Wärme an das Wärmeübertragungsmedium bei. Zudem gewährleistet das wärmeleitende Material eine gute Wärmeverteilung über die Höhe des Temperiermoduls.

Die Dicke der Zwischenschicht liegt im Allgemeinen bei 0,1 bis 0,5 mm, vorzugsweise 0,2 bis 0,3 mm, und die Breite bei 0,1 mm bis ≥ 10 mm. Die Tiefe der Durchflusskanäle, die die Zwischenschicht vollständig durchschneiden, entspricht der Dicke der Zwischenschicht. Die Tiefe der rinnenförmigen Durchflusskanäle sowie Breite der Durchflusskanäle (durchtrennend oder rinnenförmig) ergibt sich je nach der Dicke der Zwischenschicht und Anwendungsfall. Es versteht sich, dass die Dicke und Breite der Zwischenschicht beziehungsweise Tiefe der Durchflusskanäle je nach Bedarf variieren können.

Damit ergibt sich der Schichtaufbau für eine besonders bevorzugte Ausführungsform des erfindungsgemäßen Temperaturmoduls im Querschnitt wie folgt:
- Außenhülle (mit Randbereich mit Leitungskanal)
- Unidirektionale Carbonfaser-Kompositschicht
- Zwischenschicht, vorzugsweise aus gut wärmeleitfähigen Material, mit Durchflusskanälen
- Unidirektionale Carbonfaser-Kompositschicht
- Außenhülle (mit Randbereich mit Leitungskanal).

Die Außenhülle kann um die weiteren Schichten /Lagen mittels herkömmlicher Gießverfahren gegossen werden, wobei gleichzeitig der Randbereich mit Leitungskanal angegossen werden kann.

Das Wärmeübertragungsmedium kann flüssig oder gasförmig sein. Aufgrund der besseren Wärmeübergänge ist ein flüssiges Medium zu bevorzugen.

Gemäß einer vorteilhaften Ausgestaltung wird ein Gradient in der Kühlleistung über die Fläche des Temperiermoduls erzeugt. Dies bedeutet, dass in Bereichen mit thermisch höherer Belastung entsprechend eine höhere Kühlleistung ermöglicht wird als in Bereichen mit geringerer thermischer Belastung. Wie bereits erwähnt, sind die Bereiche der Elektrodenkontakte einer besonders hohen thermischen Belastung und Wärmeentwicklung ausgesetzt. Durch das Vorsehen eines Temperiergradienten können diese Bereiche wirkungsvoll entlastet werden.

Nachstehend sind Beispiele für Maßnahmen wie Mittel zur Erzeugung eines Termperaturgradienten aufgeführt. Die Aufführung ist nicht abschließend.

Zur Erzeugung eines Gradienten können zum Beispiel in den Bereichen mit einer höheren Wärmeentwicklung eine größere Anzahl an Durchflusskanälen vorgesehen sein als in weniger wärmebelasteten Bereichen.

Es können unterschiedlich wärmeleitende Materialien für die Zwischenschicht verwendet werden. In diesem Fall wird im Bereich der größten Wärmeentwicklung ein Material mit sehr guter Wärmeleitfähigkeit, zum Beispiel Kupfer, platziert. Mit zunehmender Entfernung von dem Bereich mit der größten Wärmeentwicklung können dann Materialien mit abnehmender Wärmeleitfähigkeit eingesetzt werden.

Die Durchflusskanäle können unterschiedliche Durchmesser aufweisen, wobei die Kanäle im Bereich mit der größten Wärmeentwicklung einen größeren Durchmesser haben und der Durchmesser mit zunehmender Entfernung von dem Bereich mit der größten Wärmeentwicklung kleiner wird, so dass in den Bereichen mit größter Wärmeentwicklung eine höhere Kühlung und insgesamt eine Homogenisierung der Wärmeverteilung über die Batteriezellfläche erzielt werden kann. Im Fall der Leitungskanäle kann der Durchmesser in Richtung geringerer Wärmebelastung abnehmen.

In den Durchflusskanälen, und/oder in den Leitungskanälen, kann ein poröses Material eingesetzt werden, dessen Porosität mit zunehmender Entfernung von dem Bereich mit der größten Wärmeentwicklung abnimmt.

In den Durchflusskanälen, und/oder in den Leitungskanälen, können Hindernisse vorgesehen sein, deren Anordnung und/oder Ausgestaltung derart gewählt ist, dass die Durchflussgeschwindigkeit des Wärmeübertragungsmediums mit zunehmenden Abstand von dem Bereich mit der größten Wärmeentwicklung zunimmt. Beispielsweise kann die Anzahl der Hindernisse mit zunehmender Entfernung von dem Bereich mit der größten Wärmeentwicklung zunehmen, wodurch die Fließgeschwindigkeit verringert wird.

Es versteht sich, dass die Mittel zur Erzeugung eines Temperaturgradienten miteinander kombiniert werden können.

Eine Alternative oder zusätzliche Möglichkeit zur Erzeugung eines Gradienten in der Kühlleistung ist das Vorsehen von Kühlfinnen an der Innenwandung der Durchflusskanäle, die in den Durchflußkanal hineinragen. Zur Abstufung der Kühlleistung können die Finnen mit unterschiedlich großen Abständen und/oder unterschiedlicher Anzahl an der Innenwandung angebracht sein.

Die Kühlfinnen können auf verschiedenen Wegen hergestellt werden, zum Beispiel durch elektrolytische Abscheidung, Herausätzen aus einer dünnen Folie, Stanzen etc.

Durch die Finnen wird die umströmbare Oberfläche erhöht, wodurch die Homogenisierung der Temperaturverteilung in dem Wärmeübertragungsmedium verbessert werden kann. Gleichzeitig können sie auch zur Regulierung des Strömungswiderstandes des Wärmeübertragungsmediums dienen.

Insbesondere für die Anwendung in Leitungskanälen sind Maßnahmen wie Abnahme des Durchmessers, Vorsehen eines porösen Materials und Vorsehen von Hindernissen, wobei die Porosität bzw. Anzahl von Hindernissen in Richtung von Bereichen mit geringerer Wärmebelastung abnimmt, geeignet

Gemäß einer Ausgestaltung können mit dem Temperiermodul die gegenpoligen Anschlusskontakte einer Batteriezelle direkt mitgekühlt werden. Dafür wird aus dem Temperiermodul eine Kühllasche aus einem wärmeleitenden Material herausgezogen, die direkt mit den Zellkontakten verbunden werden kann.

Vorteilhafterweise kann zur Bildung einer oder mehrerer Kühllaschen ein entsprechendes Formteil aus einem endständigen Abschnitt der Zwischenschicht aus wärmeleitenden Material herausgezogen werden.

Die Kühllaschen dienen als Wärmesenke, die eine direkte Kühlung der Anschlusskontakte ermöglichen, die generell die effektivste Methode der Zellkühlung darstellt. Die Kühllaschen geben innerhalb des Termperiermoduls, über den Kontakt mit der Carbonfaser-Kompositlage und Wärmeübertragungsmedium, die Wärme direkt an das Wärmeübertragungsmedium ab.

Um bei Vorsehen von Kühllaschen einen Kurzschluss zwischen den beiden gegenpoligen Anschlusskontakten zu vermeiden, muss die Carbonfaser-Kompositschicht gegenüber den Zellkontakten elektrisch getrennt werden. Zur elektrischen Trennung kann in der Carbonfaser-Kompositschicht eine isolierende Unterbrechung aus einem elektrisch isolierenden Material vorgesehen sein.

Mit einer elektrisch isolierenden Unterbrechung wird die Carbonfaser-Kompositschicht in zwei elektrisch voneinander isolierte Teile getrennt.

Die Position der elektrisch isolierenden Unterbrechung richtet sich nach der Lage der elektrischen Kontakte der Batteriezelle: d.h., ob sich 1.) jeweils ein Kontakt an gegenüberliegenden Seiten oder 2.) zwei Kontakte nebeneinander auf derselben Seite der Batteriezelle befinden.

Im ersten Fall ist die elektrisch isolierende Unterbrechung in der Carbonfaserkomposit-Schichten mittig quer zur Verbindungsachse zwischen den elektrischen Kontakten und im zweiten Fall mittig parallel zu den elektrischen Kontakten orientiert. In beiden Fällen werden die Carbonfaserkomposit-Schichten in voneinander elektrisch isolierte Teile unterteilt. In der Regel wird die Carbonfaserkomposit-Schicht in zwei Hälften getrennt.

Die elektrisch isolierende Unterbrechung kann beispielsweise durch Einfügen eines Trennstreifens aus elektrisch isolierenden Material in die Carbonfaserkomposit-Schichten erfolgen, der die Carbonfaserkomposit-Schichten in zwei Teile trennt.

Da die Carbonfaserkomposit-Schichten aus einer Reihe von Faserlagen aufgebaut ist, können dafür z. B. entlang der Trennfläche die Fasern jeder Faserlage in ausreichender Länge eingekürzt werden und der dabei entstehende Leerraum durch ein isolierendes Material aufgefüllt werden.

Das elektrisch isolierende Material für die Unterbrechung kann ein Glasfaserkomposit oder ein anderes geeignetes elektrisch isolierendes Material sein.

Die Dicke der elektrischen Unterbrechung orientiert sich an der Dicke der Carbonfaser-Kompositschicht und kann bei 0,1 bis 0,5 mm, vorzugsweise bei 0,2 bis 0,3 mm, liegen.

Für den Betrieb werden die Leitungkanäle des Temperiermoduls an ein übergeordnetes Kühl-Heizsystem angeschlossen werden, mit dem das Wärmeübertragungsmedium entsprechend den Betriebs- und Umgebungsbedingungen temperiert werden kann.

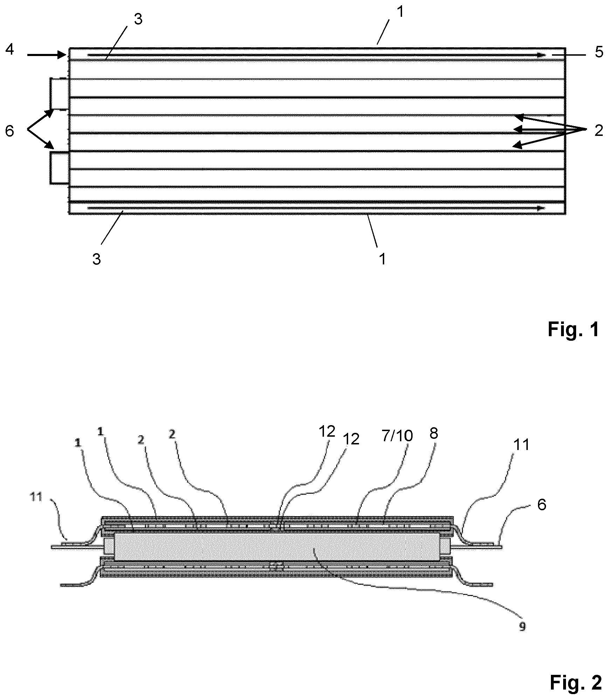

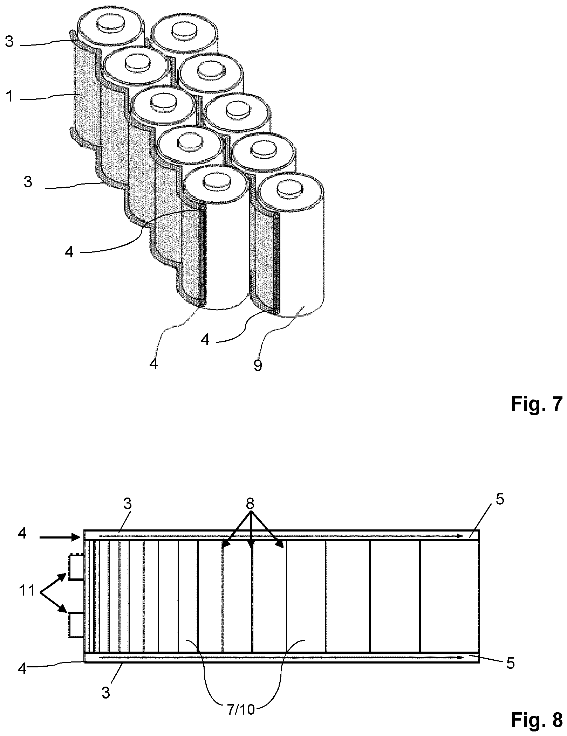

Die Erfindung wird nachfolgend anhand von Ausführungsbeispielen unter Bezugnahme auf die Figuren näher erläutert. In den Figuren 1 bis 6 sind Ausführungsformen des erfindungsgemäßen Temperiermoduls für die Anwendung bei flachen Zellen wie z.B. prismatische Zellen oder Pouch-Zellen dargestellt. Figur 7 zeigt eine Anwendungsform für zylindrische Zellen.

Es zeigt:
**Figur 1** eine Ausführungsform eines erfindungsgemäßen Temperiermoduls mit einer im wesentlichen plattenförmigen rechteckigen Grundform mit zwei sich gegenüberliegenden Hauptflächen mit zwei Längsseiten und zwei Kurzseiten;
**Figur 2** die Ansicht einer weiteren Ausführungsform des erfindungsgemäßen Temperiermoduls in einem Längsschnitt, wobei zwei Termperiermodule beidseitig an einer flachen Batteriezelle anliegen,
**Figur 3** eine Ansicht eines Längsschnitts durch ein Temperiermodul nach Figur 2, angeordnet auf einer Fläche einer Pouch-Zelle;
**Figur 4** eine Draufsicht auf einen Schnitt parallel zur Oberfläche des Termperiermoduls nach Figur 3;
**Figur 5** die Ansicht der Schnittlage A senkrecht zur Oberfläche gemäß Figur 4;
**Figur 6** die Draufsicht auf einen Schnitt parallel zur Oberfläche eines Temperiermoduls nach Figuren 2 bis 5 mit zusätzlichen Kühlfinnen;
**Figur 7** ein Zellpaket bestehend aus zylindrischen Zellen mit einem an die zylindrische Form angepassten erfindungsgemäßen Temperiermodul, und
**Figuren 8 bis 12** verschiedene Möglichkeiten zur Graduierung der Wärmeableitung in einem erfindungsgemäßen Temperiermodul.

In **Figur 1** ist eine Draufsicht auf einen Schnitt parallel zur Oberfläche eines Temperiermoduls mit plattenförmiger rechteckiger Grundform gezeigt. Das Temperiermodul gemäß Figur 1 ist für den Einsatz mit flachen Batteriezellen ausgelegt, deren Elektrodenkontakte 6 sich auf derselben Batterieseite befinden und in der Figur über die linke Kurzseite des Moduls hinausragen.

Zu sehen sind die Randbereiche der Außenhülle 1 entlang der Längsseiten und die an den Randbereichen befindlichen Leitungskanäle 3, die sich zwischen den beiden Kurzseiten entlang der Längsseiten erstrecken. Zwischen den Randbereichen angeordnet ist mindestens eine Schicht aus unidirektionalem Carbonfaser-Komposit 2. Die Carbonfasern erstrecken sich parallel von der Kurzseite mit den Elektrodenkontakten 6 entlang der Längsseiten zur gegenüberliegenden Kurzseite (in der Figur rechts).

Jeder Leitungskanal 3 weist an den Enden an den Kurzseiten jeweils eine Eintrittsöffnung 4 und eine Austrittsöffnung 5 für das Wärmeübertragungsmedium auf. Die Eintrittsöffnungen 4 liegen auf der selben Kurzseite, d.h. an der Kurzseite, auf der sich im Anwendungsfall die Elektrodenkontakte 6 befinden, und die Austrittsöffnungen 5 jeweils auf der gegenüberliegenden Kurzseite.

Der Strömungsverlauf des Wärmeübertragungsmedium in den Leitungskanälen 3 ist durch die Orientierung des in den Leitungskanälen 3 verlaufenden Pfeils angedeutet. Die in den Elektrodenkontaktbereichen generierte hohe Wärmebelastung kann durch das dort eintretende frische Wärmeübertragungsmedium und mittels der parallel orientierten Carbonfasern effizient zum gegenüberliegenden kühleren Ende abgeleitet werden, so dass die Wärmebelastung über die gesamte Zellfläche im Wesentlichen gleichmäßig verteilt werden kann.

In **Figur 2** ist ein Längsschnitt durch eine Anordnung von zwei Temperiermodulen gezeigt, die an den Hauptflächen einer Pouch-Zelle 9 anliegen. In dieser Ausführungsform hat das Modul zwei Schichten aus unidirektionalem Carbonfaser-Komposit 2, zwischen denen sich eine Zwischenschicht 7 mit Durchflusskanälen 8 befindet.

Einer, mehrere oder alle der Durchflusskanäle 8 kann/können mit den Leitungskanälen 3 verbunden sein, die in den Randbereichen der Hauptflächen entlang den Längsseiten verlaufen.

Die Zwischenschicht 7 besteht vorzugsweise aus einem wärmeleitfähigen Material, wie einem Metall wie z.B. Kupfer. Sie kann aber auch aus jedem anderen geeigneten Material hergestellt sein wie zum Beispiel einem wärmeleitfähigen Kunststoff-Compound.

Wie bereits erwähnt, können die Durchflusskanäle 8 die Zwischenschicht 7 vollständig durchschneiden, wodurch separate Abschnitte 10 der Zwischenschicht 7 erhalten werden, und der Abstand zwischen benachbarten Abschnitten 10 einen Durchflusskanal 8 definiert.

Vorzugsweise befindet sich an den beiden Kurzseiten (Enden) eines Temperiermoduls ein Abschnitt 10 aus wärmeleitfähigen Material, aus dem eine Lasche als Kühllasche 11 herausgezogen ist, die in Kontakt mit dem Elektrodenkontakt 6 der Batterierzelle 9 (hier z.B. Pouch-Zelle) steht. Diese Kühllaschen 11 dienen als Wärmesenke zur direkten Kühlung der Elektrodenkontakte 6.

Um zu verhindern, dass die Kühllaschen 11 innerhalb des Temperiermoduls über den Kontakt mit den Carbonfaser-Kompositschichten 2 und dem Wärmeübertragungsmedium die beiden gegenpoligen Elektrodenkontakte 6 elektrisch kurzschließen, können die Carbonfaser-Kompositschichten 2 mittels einer entsprechenden Unterbrechung gegenüber den Elektrodenkontakten 6 elektrisch isoliert werden. Hierfür kann in den Carbonfaser-Kompositschichten 2 eine elektrisch isolierende Unterbrechung 12 vorgesehen sein, die sich quer über die gesamte Breite der Carbonfaser-Kompositschicht 2 erstreckt. Das elektrisch isolierende Material für die Unterbrechung 12 kann ein Glasfaserkomposit sein. Die elektrisch isolierende Unterbrechung 12 kann streifenförmig zwischen den Carbonfaser-Kompositschichten 2 und einem Abschnitt 10 verlaufen. Sie kann auch integraler Bestandteil der Carbonfaser-Kompositschicht 2 sein.

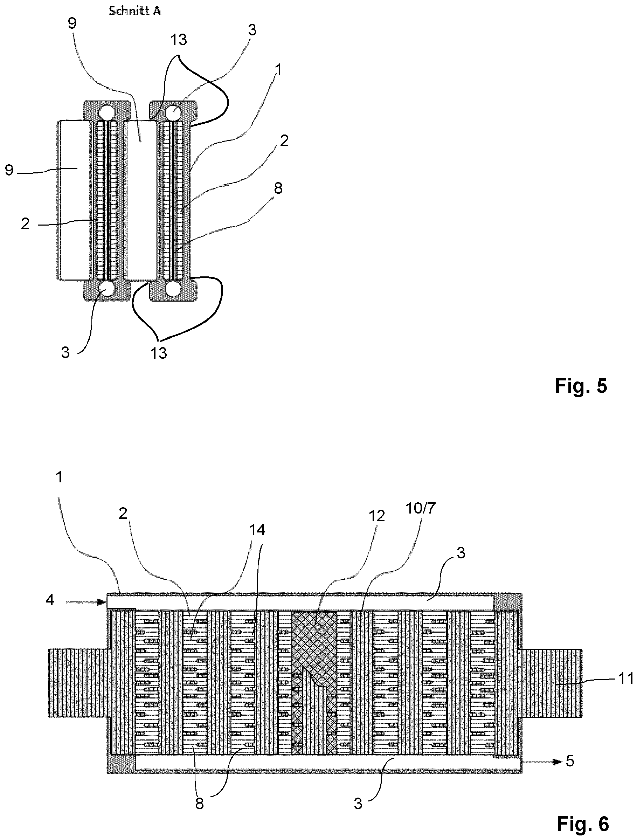

Wie aus Figuren 2 und 5 ersichtlich ist, kann auf der Außenseite in den Hauptflächen der Temperiermodule, die im Anwendungsfall an der Batteriezelle 9 anliegen, eine Vertiefung oder Mulde 13 vorgesehen sein, die den Längen- und Breitendimensionen des Zellkörpers 9 entspricht und den Zellkörper 9 fixieren bzw. in einem Zellstapel (Figur 5) tragen kann.

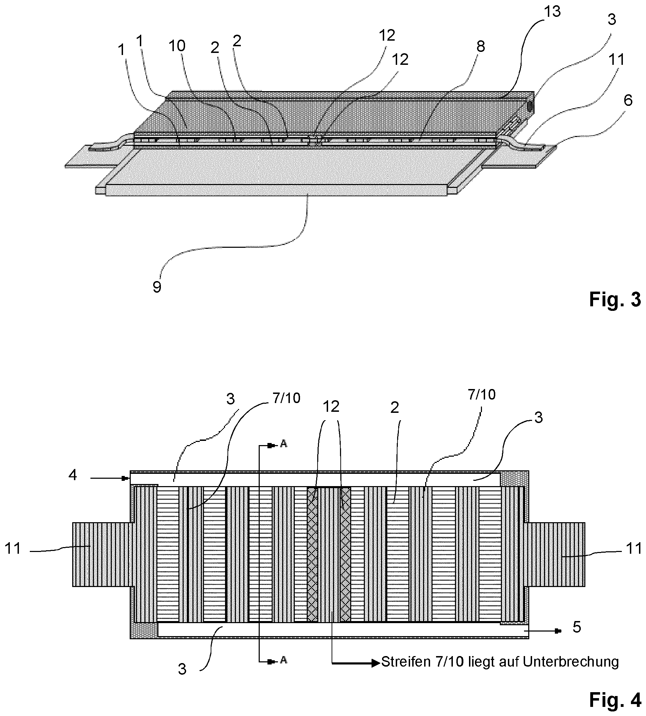

In **Figur 3** ist ein Längsschnitt durch ein Temperiermodul gezeigt, das auf einer Pouch-Zelle 9 angeordnet ist. Zu erkennen sind die beabstandet voneinander angeordneten, vorzugsweise wärmeleitfähigen Abschnitte 10, wobei aus den endständigen Abschnitten 10 an den Kurzseiten des Temperiermoduls jeweils eine Kühllasche 11 zur direkten Kühlung der Kontakte 6 herausgezogen ist. Entsprechend ist eine elektrische Unterbrechung 12 in die Carbonfaser-Kompositschicht 2 eingebaut, um einen Kurzschluss der beiden gegenpoligen Elektrodenkontakte 6 zu vermeiden.

Auf der in Figur 3 hinten liegenden Längsseite des Temperiermodul ist der Randbereich mit Leitungskanal 3 zu sehen.

Eine Draufsicht auf einen Schnitt parallel durch die Zwischenschicht 7 mit Durchflusskanälen 8 bzw. Abschnitten 10 des erfindungsgemäßen Temperiermoduls nach Figur 3 ist in **Figur 4** dargestellt. Deutlich zu erkennen sind die Leitungskanäle 3, die sich entlang der beiden Längsseiten des Temperiermoduls erstrecken. Ein Leitungskanal 3 (in der Figur oben) hat eine Fluideintrittsöffnung 4 und der gegenüberliegende Leitungskanal 3 eine Fluidaustrittsöffnung 5, wobei Eintritt 4 und Austritt 5 an sich gegenüberliegenden Kurzseiten des Moduls angeordnet sind. An dem den Eintritts- bzw. Austrittsöffnungen 4, 5 gegenüberliegenden Ende sind die Leitungskanäle 3 geschlossen.

Die Zwischenschicht 7 kann aus streifenförmigen, vorzugsweise wärmeleitfähigen Abschnitten 10 gebildet sein, die waagrecht quer über die Modulfläche von dem Leitungskanal 3 mit Eintritt 4 zu dem Leitungskanal 3 mit Austritt 5 angeordnet sind. Die Abstände zwischen benachbarten Abschnitten 10 definieren die Durchflusskanäle 8 für das Wärmeübertragungsmedium.

Die endständigen wärmeleitfähigen Abschnitte 10 weisen Kühllaschen 11 auf, die aus dem Modul herausragen und als Wärmesenke für die elektrischen Kontakte 6 einer Batteriezelle 9 fungieren. Entsprechend befindet sich eine elektrische Unterbrechung 12, hier auf beiden Seiten des mittleren Abschnitts 10 angeordnet, in dem Modul, um die entgegen gesetzt liegenden Elektrodenkontakte 6 elektrisch voneinander zu isolieren.

In **Figur 5** ist die Ansicht der Schnittlage A senkrecht zur Oberfläche gemäß Figur 4 dargestellt.

Gezeigt ist eine Batterieanordnung mit zwei Batteriezellen 9, die in Kontakt mit zwei Temperiermodulen stehen. Eine Batteriezelle 9 ist hier zwischen den zwei Temperiermodulen angeordnet. Die zweite Batteriezelle 9 liegt mit einer Hauptfläche an der freien zweiten Hauptfläche des linken Temperiermoduls an. Deutlich zu erkennen sind die Randbereiche der Außenhülle 1 mit den Leitungskanälen 3 sowie die zwischen den Randbereichen auf der Außenseite verlaufende Absenkung/Vertiefung 13 der Außenhülle 1, die zur Halterung der Batteriezellen 9 dient. Auf den Innenseiten der Außenhülle 1 befindet sich jeweils eine Schicht aus Carbonfaser-Komposit 2, die sich entlang der Hauptflächen der Temperiermodule und zwischen den beiden gegenüberliegenden Randbereichen der Außenhülle 1 erstrecken. Die mittlere Lage ist ein Schnitt durch einen Durchflusskanal 8 der Zwischenschicht 7.

Es versteht sich, dass die Batterieanordnung als Batteriestapel oder- pack mit einer gewünschten Anzahl an Batteriezellen 9 mit dazwischen angeordneten Temperiermodulen ausgestaltet sein kann, wobei auch die freien Hauptflächen der endständigen Batteriezellen an einem Temperiermodul anliegen können.

**Figur 6** zeigt eine Ausgestaltung des Temperiermoduls wie es in Figuren 2 und 5 gezeigt ist, als Schnitt parallel zur Oberfläche des Temperiermoduls. In dieser Ausgestaltung befinden sich jeweils eine Anzahl von Kühlfinnen 14 an den Seitenflächen der streifenförmigen Abschnitte 10 der Zwischenschicht 7, die in die Durchflußkanäle 8 hineinragen. Die Kühlfinnen 14 bewirken eine Erhöhung der Oberfläche der streifenförmigen Abschnitte 10 und damit eine bessere Wärmeübertragung. Wie hier gezeigt, können die Finnen 14 an zwei sich gegenüberliegenden Seitenflächen von benachbarten wärmeleitfähigen streifenförmigen Abschnitten 10 versetzt zueinander angeordnet sein, und können sich in den Bereich einer Lücke zwischen zwei benachbarten Finnen 14 an der gegenüberliegenden Seitenfläche eines streifenförmigen Abschnitts 10 hinein erstrecken.

Es versteht sich, dass die Anzahl und Anordnung der Kühlfinnen 14 je nach Bedarf variieren kann.

Zur elektrischen Isolierung der sich gegenüberliegenden Kurzseiten mit Kühllaschen 11, d.h. der Position der gegenpoligen Elektroden 6 einer Batteriezelle 9 im Anwendungsfall, ist eine elektrische Unterbrechung 12 vorgesehen. Die elektrische Unterbrechung 12 erstreckt sich quer über die gesamte Breite zwischen den Leitungskanälen 3 des Moduls.

Figuren 1 bis 6 zeigen die Ausgestaltung und die Verwendung des erfindungsgemäßen Temperiermoduls für flache Batteriezellen, wie zum Beispiel Pouch-Zellen. Das erfindungsgemäße Temperiermodul kann jedoch auch zur Temperierung von Batteriezellen mit einer anderen als einer flachen Gestalt eingesetzt werden, wie zum Beispiel für zylindrische Zellen, wie in Figur 7 dargestellt.

Die Funktionalitäten sind dabei identisch.

Bei Bedarf kann für diese Anwendung die Flexibilität des Moduls erhöht werden, so dass sich die Form des Moduls besser an die gekrümmte Oberfläche von zylindrischen Batteriezellen anpassen kann. Beispielsweise kann hierfür dem Bindeharzsystem der Schicht aus Carbonfaser-Komposit 2 ein höherer Anteil an Weichmachern zugesetzt werden, die dem Komposit eine höhere Flexibilität verleihen. Beispiele sind monofunktionale Siloxane oder epoxidierte Ölsäureester. Prinzipiell kann die Schicht aus Carbonfaser-Komposit 2 aber auch mittels einer entsprechenden wellenförmigen Pressform in einer Presse unter Druck und Temperatur in die gewünschte Wellenform verpresst werden.

Wie bereits vorstehend beschrieben, kann eine Graduierung der Wärmeableitung gewünscht sein, um zum Beispiel ein Temperaturgefälle in der Batteriezelle 9 auszugleichen. Dabei kann in Bereichen mit besonders hoher Wärmebelastung eine höhere Wärmeableitung vorgesehen sein, als in Bereichen mit geringerer Wärmebelastung. Beispiele für Mittel zur Verwirklichung einer Graduierung der Wärmeableitung sind schematisch in Figuren 8 bis 12 dargestellt.

Die **Figuren 8 bis 12** zeigen jeweils eine Draufsicht auf einen Schnitt parallel zur Oberfläche eines erfindungsgemäßen Temperiermoduls. Im Gegensatz zu der in Figuren 2 und 7 gezeigten Ausführungsform befinden sich in der hier gezeigten Ausführungsform die Kühllaschen 11 auf derselben Kurzseite des Moduls. Alternativ zu den in Figuren 2 bis 7 gezeigten Modul weisen die Leitungskanäle 3 jeweils eine Fluideintrittsöffnung 4 an der einen Kurzseite und eine Fluidaustrittsöffnung 5 an der entgegengesetzt liegenden Kurzseite auf, wobei sich in beiden Leitungskanälen 3 die Eintritte 4 und Austritte 5 jeweils auf derselben Kurzseite des Moduls befinden.

Die Fluideintrittsöffnungen 4 befinden sich auf der Kurzseite mit den Kühllaschen 11 und damit auf der Seite, auf der sich die Elektrodenkontakte 6 einer Batteriezelle 9 im Anwendungsfall beim Anbringen des Temperiermoduls an eine Batteriezelle 9 befinden. Dies ist sinnvoll, da im Bereich der Elektrodenkontakte 6 die höchste Wärmebelastung generiert wird.

Wie bereits in Verbindung mit Figur 1 ausgeführt, kann die Wärmeleitung durch Vorsehen einer Schicht aus unidirektionalem Carbonfaser-Komposit 2 bewirkt werden, wobei sich die Carbonfasern von der Seite mit den Elektrodenkontakten 6 bis zur gegenüberliegenden Kurzseite des Moduls erstrecken. Somit kann die Wärme von dem thermisch am meisten belasteten Bereich mit den Elektrodenkontakten 6 zu thermisch weniger belasteten Bereichen abgeführt werden.

Gemäß einer weiteren Möglichkeit zur Wärmeableitung und Wärmehomogenisierung über die Zellfläche kann die Anzahl der Durchflusskanäle 8 über die Längenerstreckung des Moduls variiert werden, wie in Figur 8 gezeigt. So kann die Anzahl der Durchflusskanäle 8 im Bereich der höchsten thermischen Belastung (in Figur 8 auf der linken Seite) größer sein als in Bereichen mit geringerer Wärmebelastung.

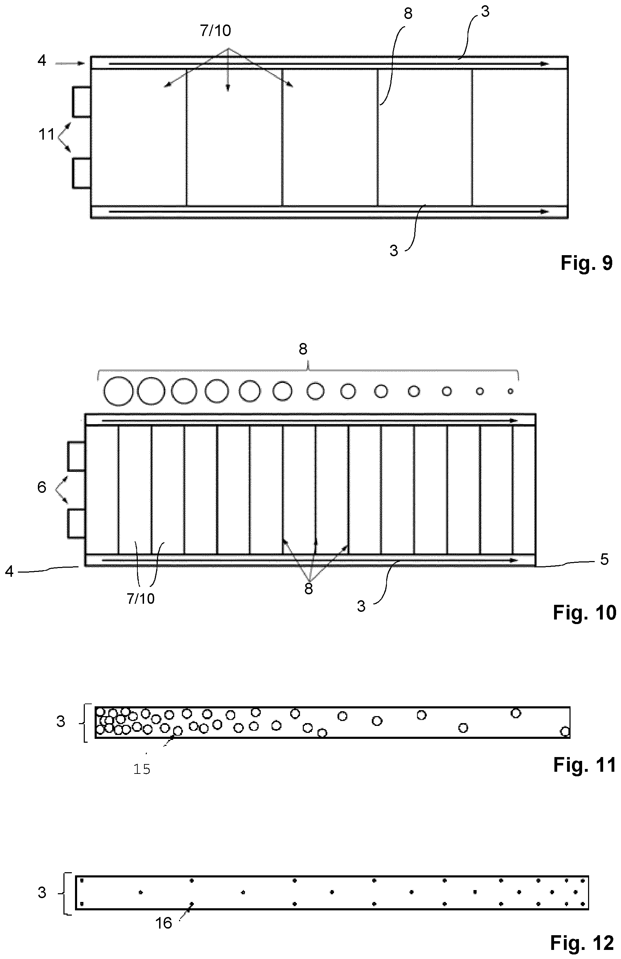

Im Fall von wärmeleitfähigen Streifen 10, die die Durchflusskanäle 8 definieren, können Materialien mit unterschiedlicher Wärmeleitfähigkeit eingesetzt werden (siehe Figur 9). In den Bereichen mit hoher Wärmebelastung können demnach Materialien mit höherer Wärmeleitfähigkeit verwendet werden als in Bereichen mit geringer Wärmebelastung. Beispielsweise kann ein sehr guter Wärmeleiter, zum Beispiel Kupfer, an der Stelle der größten Wärmebelastung platziert werden, d.h. in der Figur 9 auf der Seite mit den Elektrodenkontakten, hier durch die Kühllaschen 11 verdeckt. Mit zunehmender Entfernung von diesem Bereich können für die wärmeleitfähigen Streifen 10 Materialien mit abnehmender Wärmeleitfähigkeit, zum Beispiel Aluminium, und so weiter, verwendet werden. Ein Gradient der Wärmeableitung kann durch unterschiedliche Durchmesser der Durchflusskanäle 8 realisiert werden, wie in Figur 10 dargestellt. Dabei wird der Durchmesser der Durchflusskanäle 8 mit zunehmender Entfernung von dem Bereich mit der höchsten thermischen Belastung kleiner. Die Kühlleistung ist damit in dem Bereich mit Durchflusskanälen 8 mit großem/größerem Durchmesser höher und nimmt mit dem Durchmesser ab, um so eine höhere Kühlung in dem thermischen mehr belasteten Bereich zu erzielen und eine Homogenisierung der Wärmeverteilung bzw. Wärmebelastung über die Längenerstreckung des Moduls zu erhalten.

In Figur 10 ist die Abnahme der Durchmesser der Durchflusskanäle 8 von der Seite mit den Elektrodenkontakten 6 zu der entgegengesetzt liegenden Seite durch die über dem Temperiermodul dargestellte Reihe an Kreisen mit abnehmenden Durchmesser veranschaulicht.

In den Leitungskanälen 3 und/oder den Durchflusskanälen 8 kann ein poröses Material (15) vorgesehen sein, dessen Porosität mit zunehmender Entfernung von dem thermisch am meisten belasteten Bereichen abnimmt.

Ein Beispiel mit einem Längsschnitt durch einen Leitungskanal 3 mit porösen Material 15 ist in Figur 11 gezeigt. Der Bereich mit der höchsten Porosität 15 befindet sich in Figur 11 auf der linken Seite. Dies ist hier der Bereich mit der höchsten thermischen Belastung. In Richtung zu der gegenüberliegenden rechten Kurzseite nimmt die Porosität 15 sukzessive ab.

Wird das poröse Material 15 in den Durchflusskanälen 8 vorgesehen, ist es zweckmäßig, dass die Porosität 15 in Durchflusskanälen in den thermisch stärker belasteten Bereichen in Richtung thermisch geringer belasteten Bereichen abnimmt.

Wie in Figur 12 gezeigt, können in den Kanälen, insbesondere in den Leitungskanälen 3, Hindernisse 16 zur Regulierung der Durchflussgeschwindigkeit des Wärmeübertragungsfluids vorgesehen sein. Wie in Figur 12 dargestellt, ist die Anzahl der Hindernisse 16 und damit die Behinderung des Durchflusses in dem Bereich mit der höchsten Wärmeentwicklung (hier am linken Ende) am geringsten und nimmt in Richtung zu dem Bereich mit der geringsten Wärmeentwicklung (in der Figur rechts) zu.

Befinden sich die Hindernisse in Durchflusskanälen 8 sollte die Behinderung des Durchflusses, d.h. die Anzahl der Hindernisse 16, in den Durchflusskanälen 8 in thermisch mehr belasteten Bereichen größer sein als in thermisch weniger belasteten Bereichen.

Eine Regulierung der Durchflussgeschwindigkeit des Wärmeübertragungsmediums kann auch durch Auswahl der Form und/oder der Größe des Hindernisses erfolgen.

Eine Verringerung bzw. Graduierung der Wärmeübertragung kann auch Abnahme der Anzahl an Kühlfinnen 14 erzielt werden.

Es versteht sich, dass auch Kombinationen der vorstehend aufgezeigten Maßnahmen zur Regulierung des Temperaturgradienten über das Temperiermodul möglich sind. Beispielsweise können die Maßnahmen für die Regulierung des Durchflusses wie sie in **Figuren 11 und 12** gezeigt sind, mit einer oder mehreren weiteren Maßnahmen kombiniert werden, wie Vorsehen einer Schicht aus einem unidirektionalen Carbonfaser-Komposit (Figur 1), Vorsehen unterschiedlicher Abstände der Durchflusskanäle (Figur 10), Vorsehen von Materialien für die wärmeleitfähigen Streifen 6 mit unterschiedlicher Wärmeleitfähigkeit (Figur 9) und/oder Abnahme der Durchmesser der Durchflusskanäle 7 gemäß Figur 10.

Für Batterien mit Elektrodenkontakten 6 auf sich gegenüberliegenden Seiten, wie z.B. in Figuren 2 bis 6, sind die wärmeableitenden Maßnahmen, wie sie in den Ausführungsformen gemäß Figuren 8 bis 12 beschrieben sind, zweckmäßiger Weise zur Mitte des Moduls ausgerichtet.

Erfindungsgemäß wird ein vielseitiges Temperiermodul zum Kühlen und Heizen von wiederaufladbaren Batteriezellen, insbesondere Lithium-Ionenbatteriezellen, bereitgestellt, das einen sicheren Betrieb im idealen Temperaturbereich zwischen 15°C bis 35 °C gewährleisten kann, eine gleichmäßige Verteilung der Wärmebelastung über die gesamte Batteriefläche, sowie effiziente Ableitung der Wärme aus thermisch besonders belasteten Bereichen, wie den Bereich der Elektrodenkontakte, und graduierte Wärmeableitung mit besonders hoher Ableitungsleistung in thermisch besonders belasteten Bereichen ermöglichen kann. Zudem ist das Temperiermodul für unterschiedliche Batterietypen und - formen auslegbar.

### Bezugszeichen

- 1: Außenhülle
- 2: Schicht aus unidirektionalem Carbonfaser-Komposit
- 3: Leitungskanal
- 4: Eintrittsöffnung für Wärmeübertragungsmedium
- 5: Austrittsöffnung für Wärmeübertragungsmedium
- 6: Elektrodenkontakte
- 7: Zwischenschicht
- 8: Durchflusskanäle
- 9: Batteriezellen
- 10: Streifen, insbesondere wärmeleitfähige Streifen (Abschnitte)
- 11: Kühllasche
- 12: Elektrisch isolierende Unterbrechung
- 13: Absenkung/Vertiefung in der Außenhülle 1
- 14: Kühlfinnen
- 15: Poröses Material
- 16: Hindernisse zur Regulierung der Durchflussgeschwindigkeit

## Patentansprüche

1. Temperiermodul zum Heizen oder Kühlen von Batteriezellen,
**wobei** das Temperiermodul eine Außenhülle (1) aus einem Polymermaterial umfasst, und die Außenhülle (1) zwei sich gegenüberliegende Hauptflächen aufweist, die entlang ihrer Kanten miteinander verbunden sind, wobei die Außenhülle (1) die innenliegenden Komponenten des Temperiermoduls umgibt,
**wobei** im Inneren des Temperiermoduls mindestens eine wärmeleitende Schicht aus unidirektionalem Carbonfaser-Komposit (2) vorgesehen ist, und sich an zwei sich gegenüberliegenden Randbereichen der Hauptflächen jeweils ein Leitungskanal (3) erstreckt für die Durchleitung eines Wärmeübertragungsmediums,
**wobei** sich die mindestens eine wärmeleitende Schicht aus unidirektionalem Carbonfaser-Komposit (2) zwischen den Leitungskanälen (3) über die Modulfläche erstreckt, und
**wobei** die Carbonfasern des Carbonfaser-Komposites (2) parallel zu den Zellkontakten einer zu temperierenden Batteriezelle ausgerichtet sind, um so Wärme von den Kontaktbereichen der Zelle abzuführen.

2. Temperiermodul nach Anspruch 1,
**wobei** auf der Innenseite jeder der beiden Hauptflächen der Außenhülle (1) eine Schicht aus unidirektionalem Carbonfaser-Komposit (2) vorgesehen ist, und sich zwischen den Schichten aus unidirektionalem Carbonfaser-Komposit (2) eine Zwischenschicht (7) befindet, die einen oder mehrere Durchflusskanäle (8) aufweist, über die die Leitungskanäle (3) verbunden sind.

3. Temperiermodul nach Anspruch 2,
**wobei** die Zwischenschicht (7) aus einem wärmeleitenden Material ist.

4. Temperiermodul nach Anspruch 2 oder 3,
**wobei** das wärmeleitende Material für die Zwischenschicht (7) ein Metall ist.

5. Temperiermodul nach Anspruch 2 oder 3,
**wobei** das wärmeleitende Material für die Zwischenschicht (7) ein wärmeleitender Kunststoff-Compound ist.

6. Temperiermodul nach Anspruch 5,
**wobei das** wärmeleitende Kunststoff-Compound eine Wärmeleitfähigkeit von mindestens 0,5 W/mK aufweist.

7. Temperiermodul nach einem der Ansprüche 2 bis 6,
**wobei** der eine oder die mehreren Durchflusskänale (8) die Zwischenschicht (7) in einzelne voneinander getrennte Abschnitte (10) unterteilt/unterteilen.

8. Temperiermodul nach einem der Ansprüche 1 bis 6,
**wobei** der eine oder die mehreren Durchflusskanäle (8) rinnenförmige Einschnitte in der Zwischenschicht sind.

9. Temperiermodul nach einem der Ansprüche 2 bis 6,
**wobei** an den Seitenwänden der Durchflusskanäle (8) Kühlfinnen (14) angebracht sind.

10. Temperiermodul nach einem der vorhergehenden Ansprüche,
**wobei** auf der Außenseite der beiden Hauptflächen eine Vertiefung (13) vorgesehen ist zur Halterung einer Batteriezelle.

11. Temperiermodul nach einem der Ansprüche 2 bis 10,
**wobei** die Durchflusskanäle (8) entlang der Querachse des Temperiermoduls zueinander parallel zwischen den Leitungskanälen (3) verlaufen.

12. Temperiermodul nach einem der Ansprüche 1 bis 11,
**wobei** Mittel zur Graduierung der Wärmeableitung vorgesehen sind.

13. Temperiermodul nach Anspruch 12,
**wobei** die Mittel ausgewählt sind unter
a) Abnahme der Anzahl der Durchflusskanäle (8) entlang des Temperaturgefälles,
b) Abnahme der Wärmeleitfähigkeit des Materials für die Abschnitte/Streifen (7/10) entlang des Temperaturgefälles,
c) Abnahme des Durchmessers der Durchflusskanäle (8) und/oder Leitungskanäle (3) entlang des Temperaturgefälles,
d) Einlegen eines porösen Materials (15) in die Leitungskanäle (3) und/oder Durchflusskanäle (8), wobei die Porosität entlang des Temperaturgefälles abnimmt,
e) Einfügen von Hindernissen (16) in die Leitungskanäle (3) und/oder Durchflusskanäle (8), wobei die Anzahl der Hindernisse (16) entlang des Temperaturgefälles zunimmt, und
f) Kombination zweier oder mehrerer der vorstehend genannten Mittel a) bis e).

14. Temperiermodul nach einem der Ansprüche 1 bis 13,
**wobei** zumindest an einer Stirnseite des Temperiermoduls eine Kühllasche (11) zur direkten Kühlung der Elektrodenkontakte (6) einer anliegenden Batteriezelle (9) vorgesehen ist.

15. Temperiermodul nach einem der vorstehenden Ansprüche 1 bis 14,
**wobei** das Polymermaterial für die Außenhülle (1) ein Elastomer ist.

## Claims

1. Temperature control module for heating or cooling of battery cells,
wherein the temperature control module comprises an outer shell (1) made of a polymer is material, and the outer shell (1) has two opposing main surfaces, which are joined to each other along their edges, wherein the outer shell (1) surrounds the inner-lying components of the temperature control module,
**wherein** at least one heat-conducting layer of unidirectional carbon fibre composite (2) is provided in the interior of the temperature control module, and a conduction channel (3) for the passage of a heat transfer medium extends along two opposing edge regions of the main surfaces,
**wherein** the at least one thermally conductive layer of unidirectional carbon fibre composite (2) extends between the conduction channels (3) over the module surface, and
**wherein** the carbon fibres of the carbon fibre composite (2) are aligned parallel to the cell contacts of a battery cell to be temperature-controlled in order to dissipate heat away from the contact areas of the cell.

2. Temperature control module according to claim 1,
**wherein** a layer of unidirectional carbon fibre composite (2) is provided on the inside of each of the two main surfaces of the outer shell (1), and between the layers of unidirectional carbon fibre composite (2) there is an intermediate layer (7) which has one or more flow channels (8) via which the conduit channels (3) are connected.

3. Temperature control module according to claim 2,
**wherein** the intermediate layer (7) is made of a thermally conductive material.

4. Temperature control module according to claim 2 or 3,
**wherein** the thermally conductive material for the intermediate layer (7) is a metal.

5. Temperature control module according to claim 2 or 3,
**wherein** the thermally conductive material for the intermediate layer (7) is a thermally conductive plastic compound.

6. Temperature control module according to claim 5,
**wherein** the thermally conductive plastic compound has a thermal conductivity of at least 0.5 W/mK.

7. Temperature control module according to one of claims 2 to 6,
**wherein** the one or more flow-through channels (8) subdivide the intermediate layer (7) into individual sections (10) separated from each other.

8. Temperature control module according to any one of claims 1 to 6,
**wherein** the one or more flow channels (8) are channel-shaped incisions in the intermediate layer.

9. Temperature control module according to any one of claims 2 to 6,
**wherein** cooling fins (14) are attached to the side walls of the flow channels (8).

10. Temperature control module according to one of the preceding claims,
**wherein** a recess (13) is provided on the outside of the two main surfaces for holding a battery cell.

11. Temperature control module according to one of claims 2 to 10,
**wherein** the flow channels (8) extend along the transverse axis of the temperature control module parallel to each other between the line channels (3).

12. Temperature control module according to one of claims 1 to 11,
**wherein** means for graduating the heat dissipation are provided.

13. Temperature control module according to claim 12,
**wherein** the means are selected from
a) Decrease in the number of flow channels (8) along the temperature gradient,
b) Decrease in the thermal conductivity of the material for the sections/strips (7/10) along the temperature gradient,
c) Decreasing the diameter of the flow channels (8) and/or conduit channels (3) along the temperature gradient,
d) inserting a porous material (15) into the conduit channels (3) and/or flow channels (8), whereby the porosity decreases along the temperature gradient,
e) inserting obstructions (16) into the conduit channels (3) and/or flow channels (8), the number of obstructions (16) increasing along the temperature gradient, and
f) combining of two or more of the aforementioned means a) to e).

14. Temperature control module according to one of claims 1 to 13,
**wherein** a cooling tab (11) for direct cooling of the electrode contacts (6) of an adjacent battery cell (9) is provided on at least one end face of the temperature control module.

15. Temperature control module according to one of the preceding claims 1 to 14,
**wherein** the polymer material for the outer shell (1) is an elastomer.

## Revendications

1. Module de régulation en température pour chauffer ou refroidir des cellules de batterie,
le module de régulation en température comprenant une enveloppe extérieure (1) en un matériau polymère, et l'enveloppe extérieure (1) présentant deux surfaces principales opposées qui sont reliées entre elles le long de leurs bords, l'enveloppe extérieure (1) entourant les composants intérieurs du module de régulation en température,
au moins une couche thermoconductrice en composite de fibres de carbone unidirectionnel (2) étant prévue à l'intérieur du module de régulation en température, et un canal de conduction (3) pour le passage d'un fluide caloporteur s'étendant respectivement sur deux zones de bord opposées des surfaces principales,
l'au moins une couche thermoconductrice en composite de fibres de carbone unidirectionnel (2) s'étendant entre les canaux de conduction (3) sur la surface du module, et
les fibres de carbone du composite de fibres de carbone (2) étant orientées parallèlement aux contacts de cellule d'une cellule de batterie à réguler en température, de manière à évacuer la chaleur des zones de contact de la cellule.

2. Module de régulation en température selon la revendication 1, dans lequel une couche en composite de fibres de carbone unidirectionnel (2) est prévue sur le côté intérieur de chacune des deux surfaces principales de l'enveloppe extérieure (1) et entre les couches en composite de fibres de carbone unidirectionnel (2), se trouve une couche intermédiaire (7) qui présente un ou plusieurs canaux d'écoulement (8) par lesquels les canaux de conduction (3) sont reliés.

3. Module de régulation en température selon la revendication 2,
la couche intermédiaire (7) étant en un matériau thermoconducteur.

4. Module de régulation en température selon la revendication 2 ou 3,
le matériau thermoconducteur pour la couche intermédiaire (7) étant un métal.

5. Module de régulation en température selon la revendication 2 ou 3,
le matériau thermoconducteur pour la couche intermédiaire (7) étant un composé plastique thermoconducteur.

6. Module de régulation en température selon la revendication 5,
le composé plastique thermoconducteur présentant une conductivité thermique d'au moins 0,5 W/mK.

7. Module de régulation en température selon l'une quelconque des revendications 2 à 6,
le ou les canaux d'écoulement (8) divisant la couche intermédiaire (7) en sections individuelles (10) séparées les unes des autres.

8. Module de régulation en température selon l'une quelconque des revendications 1 à 6,
le ou les canaux d'écoulement (8) étant des entailles en forme de goulotte dans la couche intermédiaire.

9. Module de régulation en température selon l'une quelconque des revendications 2 à 6,
des ailettes de refroidissement (14) étant disposées sur les parois latérales des canaux d'écoulement (8).

10. Module de régulation en température selon l'une quelconque des revendications précédentes,
un renfoncement (13) étant prévu sur le côté extérieur des deux surfaces principales pour le maintien d'une cellule de batterie.

11. Module de régulation en température selon l'une quelconque des revendications 2 à 10,
les canaux d'écoulement (8) s'étendant le long de l'axe transversal du module de régulation en température, parallèlement les uns aux autres, entre les canaux de conduction (3).

12. Module de régulation en température selon l'une quelconque des revendications 1 à 11,
des moyens de graduation de la dissipation de chaleur étant prévus.

13. Module de régulation en température selon la revendication 12,
les moyens étant choisis parmi
a) la diminution du nombre de canaux d'écoulement (8) le long du gradient de température,
b) la diminution de la conductivité thermique du matériau pour les sections/bandes (7/10) le long du gradient de température,
c) la diminution du diamètre des canaux d'écoulement (8) et/ou des canaux de conduction (3) le long du gradient de température,
d) l'insertion d'un matériau poreux (15) dans les canaux de conduction (3) et/ou les canaux d'écoulement (8), la porosité diminuant le long du gradient de température,
e) l'introduction d'obstacles (16) dans les canaux de conduction (3) et/ou les canaux d'écoulement (8), le nombre d'obstacles (16) augmentant le long du gradient de température, et
f) une combinaison de deux ou plus des moyens a) à e) susmentionnés .

14. Module de régulation en température selon l'une quelconque des revendications 1 à 13, dans lequel il est prévu, au moins sur un côté frontal du module de régulation en température, une patte de refroidissement (11) pour refroidir directement les contacts d'électrode (6) d'une cellule de batterie (9) adjacente.

15. Module de régulation en température selon l'une quelconque des revendications 1 à 14 précédentes,
le matériau polymère pour l'enveloppe extérieure (1) étant un élastomère.
